## Europäisches Patentamt

## European Patent Office

## Office européen des brevets

(11) Numéro de publication: **0 208 597**
**B1**

## (12) FASCICULE DE BREVET EUROPÉEN

(45) Date de publication du fascicule du brevet:
**27.12.89**

(51) Int. Cl.⁴: **H 02 J 3/14**

(21) Numéro de dépôt: **86401397.4**

(22) Date de dépôt: **25.06.86**

(54) Adaptateur de puissance pour installations électriques, notamment domestiques.

(30) Priorité: **05.07.85 FR 8510327**

(43) Date de publication de la demande:
**14.01.87 Bulletin 87/3**

(45) Mention de la délivrance du brevet:
**27.12.89 Bulletin 89/52**

(84) Etats contractants désignès:
**AT BE DE GB IT LU NL SE**

(56) Documents cité:
**US-A-4 321 477**
**US-A-4 510 398**

(73) Titulaire: **MANUFACTURE D'APPAREILLAGE ELECTRIQUE DE CAHORS, B.P.149 Regourd, F-46003 Cahors Cédex (FR)**
Titulaire: **Feron, Paul, 29, rue A.Delieux, F-31400 Toulouse (FR)**
Titulaire: **ELECTRICITE DE FRANCE, 32 Boulevard Lascrosses, F-31002 Toulouse (FR)**

(72) Inventeur: **Tougne, Daniel, 15 Bd Gambetta Résidence le Bordeaux, F-46000 Cahors (FR)**
Inventeur: **Feron, Paul, 29 rue A. Delieux, F-31400 Toulouse (FR)**

(74) Mandataire: **Bouju, André, Cabinet Bouju 38 avenue de la Grande Armée, F-75017 Paris (FR)**

LIBER, STOCKHOLM 1989

## Description

La présente invention concerne un adaptateur de puissance pour installations électriques, notamment domestiques.

Comme l'on sait, les tarifs d'abonnement pratiqués par les organismes de distribution d'électricité croissent avec la puissance maximale souscrite. Compte tenu de cela, on a proposé des appareils appelés "délesteurs", qui présentent une entrée reliée à la sortie du disjoncteur général, et plusieurs sorties reliées chacune à un ou plusieurs points de consommation. Lorsque la puissance consommée dépasse un certain seuil légèrement inférieur à la puissance souscrite, le délesteur débranche automatiquement ces sorties en cascade selon un ordre de priorité prédéterminé, jusqu'à ce que la puissance consommée redevienne conforme à l'abonnement. Certains appareils permettent à l'utilisateur de programmer le niveau de priorité des sorties, c'est-à-dire l'ordre dans lequel elles sont débranchées en cas de dépassement du seuil.

Il existe d'autre part des systèmes de tarification selon lesquels la valeur du kWh varie dans le temps. Il existe ainsi la tarification réduite la nuit. Il existe également le système du tarif réduit toute l'année sauf pendant quelques jours dits "de pointe" où le tarif est particulièrement élevé. Selon ce dernier système, un signal avertisseur est envoyé sur le réseau un certain temps avant l'entrée en vigueur du tarif élevé, pour inviter l'usager à modérer sa consommation. Un second signal est ensuite envoyé pour commuter le compteur sur le nouveau tarif.

On connaît selon le brevet US-A-4 510 398 un système de délestage pour délester des charges afin de maintenir la consommation de puissance d'un immeuble en dessous d'un seuil prédéterminé, chaque charge étant associée à un programme parmi plusieurs programmes de délestage, chaque programme commandant le délestage des charges dans un ordre différent.

Mais ce système ne prend pas en compte d'information extérieure concernant le tarif en vigueur et ne permet donc pas à l'usager d'optimiser sa consommation d'énergie en fonction des variations de ce tarif.

Le but de l'invention est ainsi de proposer un appareil qui permette à l'usager à la fois de respecter une puissance maximale modérée et d'optimiser sa consommation d'énergie en fonction du tarif en vigueur.

Suivant l'invention, l'adaptateur de puissance, comprenant une entrée de puissance, plusieurs sorties de puissance et un dispositif délesteur capable, lorsque la puissance consommée dépasse un certain seuil, de débrancher en cascade selon un ordre préétabli certaines au moins des sorties de puissance jusqu'à ce que le seuil soit respecté, et pour rétablir ensuite le branchement des sorties dans l'ordre inverse, est caractérisé en ce qu'il comprend en outre des moyens permettant d'affecter sélectivement une autorisation d'effacement à certaines au moins des sorties de puissance indépendamment de l'ordre préétabli précité, et des moyens d'effacement sensibles à un signal représentatif du coût de l'énergie pour débrancher les sorties affectées d'une autorisation d'effacement, lorsque le coût de l'énergie est élevé.

La solution proposée selon l'invention est surprenante. En effet, l'homme du métier aurait pu a priori penser que l'ordre de délestage en dépassement de seuil définit déjà les sorties dont l'utilisateur peut se passer le plus facilement, et il aurait par conséquent trouvé logique de définir en fonction des ordres de priorité les sorties à débrancher lorsque l'énergie est chère. Cependant, il a été constaté selon l'invention que les critères selon lesquels une sortie peut être débranchée en cas de dépassement du seuil et en cas de changement de tarif ne sont pas nécessairement les mêmes. En effet, en dépassement de seuil, c'est surtout une sortie à forte puissance qu'il faut débrancher. En période d'énergie chère, c'est plutôt une sortie reliée à un appareil de puissance moyenne fonctionnant de manière prolongée. En effet c'est alors l'énergie consommée qu'il s'agit de réduire, et non plus la puissance. Par exemple, en période d'énergie chère, l'utilisateur peut désirer débrancher un chauffage électrique et mettre en service un appareil de chauffage à hydrocarbures. Il faut pour cela que l'allumeur électrique de l'appareil de chauffage à hydrocarbures puisse fonctionner même s'il consomme une puissance importante, ceci ne correspondant qu'à une faible consommation d'énergie électrique compte tenu de la très courte durée d'utilisation de cette puissance. Au contraire, en période d'énergie à bon marché, l'appareil de chauffage à combustibles sert d'appoint et il est sans importance de différer son allumage en fonction de la puissance instantanée consommée dans l'installation. Autre exemple: à une machine à laver le linge ou à laver la vaisselle suit un cycle déterminé et il est gênant, voire dommageable que ce cycle puisse être interrompu à tout moment. Ce genre d'appareil ne doit donc pas être débranché pour délester l'installation, ou tout au moins ne doit être débranché qu'en dernier recours. Par contre, le cycle complet de ces appareils correspond à une consommation d'énergie importante et il est très intéressant d'éviter leur fonctionnement pendant une période d'énergie chère.

Il n'y a pas d'interaction néfaste entre les deux modes de débranchement. Si une sortie de puissance est à l'état débranché car le tarif élevé est en vigueur, et qu'en outre le seuil de puissance est dépassé alors que cette sortie est la première à devoir être débranchée, l'ordre de débrancher cette sortie pour réduire la puissance consommée est évidemment inefficace et, le seuil de puissance demeurant dépassé, l'appareil commande le débranchement de la sortie qui vient ensuite dans l'ordre de priorité.

D'autres particularités et avantages de l'invention ressortiront encore de la description ci après.

Aux dessins annexés, donnés à titre d'exemples non limitatifs:

3

- la figure 1 est une vue schématique d'une installation électrique domestique utilisant un adaptateur de puissance selon l'invention;
- la figure 2 est une vue en perspective de cet adaptateur;
- la figure 3 est un schéma bloc de l'adaptateur;
- la figure 4 est l'organigramme général du microprocesseur inclus dans l'adaptateur; et
- les figures 5 à 12 sont les organigrammes de chaque fonction du microprocesseur.

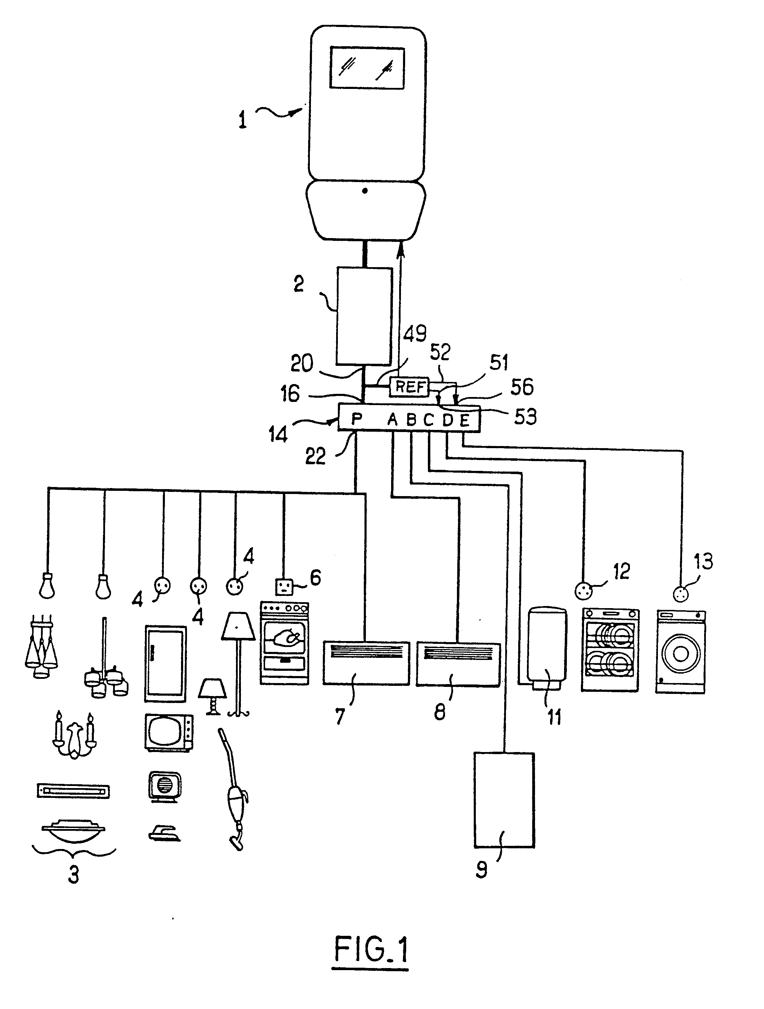

L'exemple qui va être décrit concerne une installation domestique monophasée. Elle comprend (figure 1) un compteur 1 qui est relié par l'intermédiaire d'un disjoncteur différentiel 2 à différents points de consommation, à savoir des points d'éclairage 3, des prises faible intensité 4, une prise pour cuisinière 6, un ou plusieurs appareils de chauffage électriques 7 dans des pièces occupées le jour, un ou plusieurs appareils de chauffage électriques 8 dans des pièces occupées la nuit, un appareil de chauffage d'appoint 9, à combustion initiée par allumage électrique, un chauffe-eau 11, une prise 12 pour un lave-vaisselle et une prise 13 pour un lave-linge.

Entre le disjoncteur différentiel 2 et l'ensemble de ces appareils est interposé l'adaptateur de puissance 14 selon l'invention.

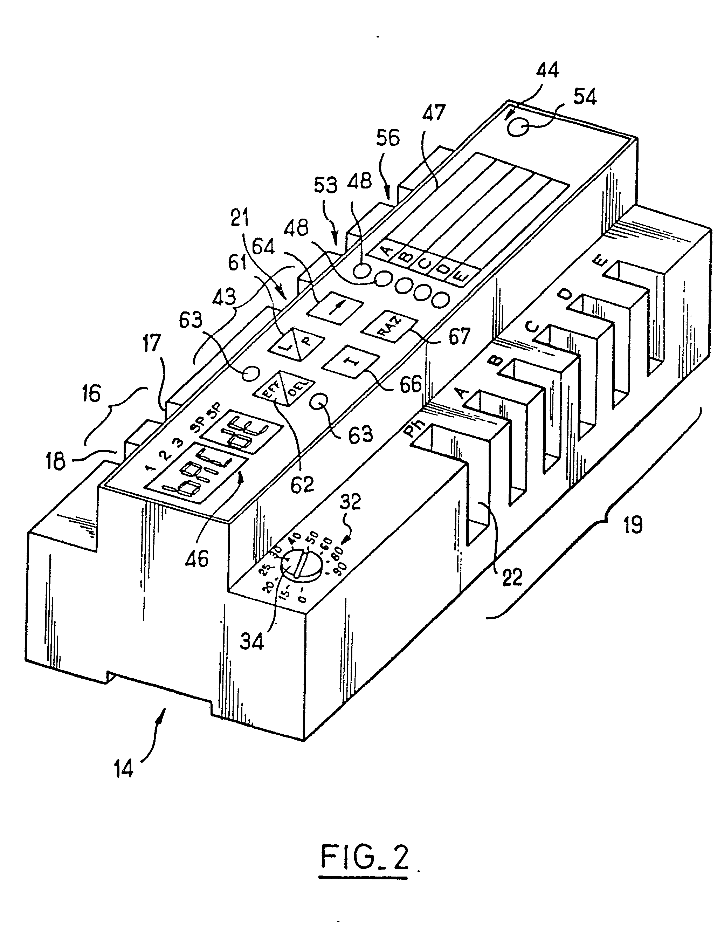

Comme le montre la figure 2, l'adaptateur 14 comprend un bornier arrivée 16 avec une borne de phase 17, borne de neutre 18 et une borne de terre 21. Ces bornes 17 et 18 sont reliées à des bornes de sortie du disjoncteur différentiel 2 par une liaison bifilaire 20 (Figure 1).

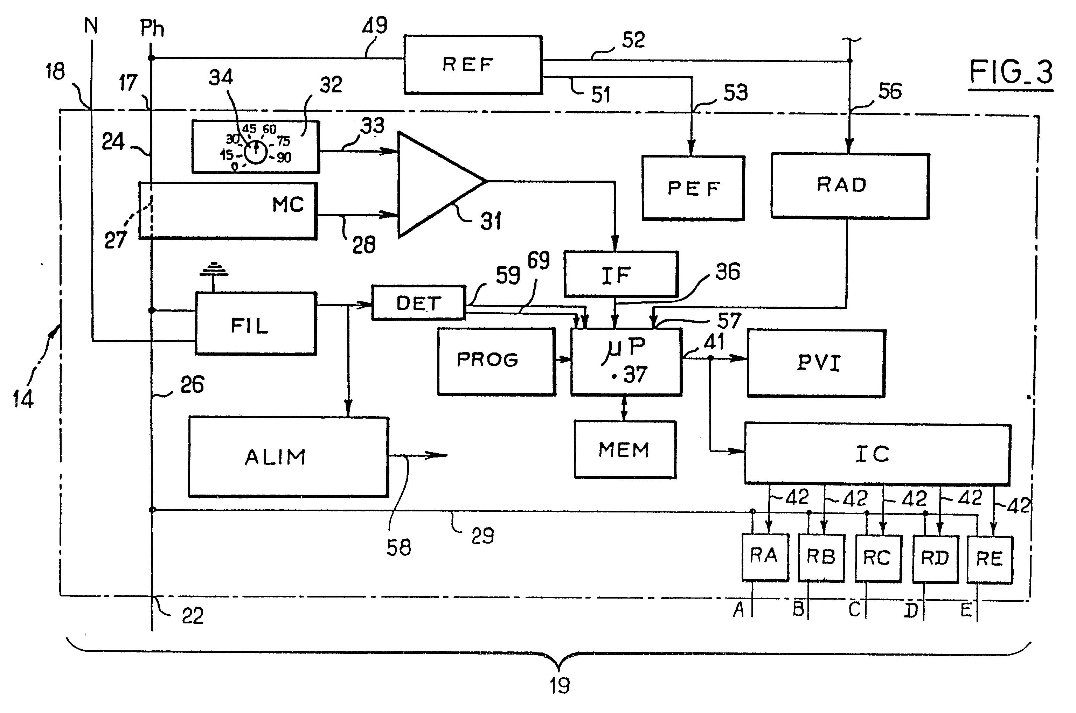

L'adaptateur 14 comprend en outre un bornier départ 19 comprenant six bornes de phase désignées respectivement par 22 et par A, B, C, D, E. Comme le montre la figure 3, la borne de phase dite "prioritaire", est en court-circuit permanent avec la borne de phase d'entrée 17, par l'intermédiaire de conducteurs 24, 26 reliés l'un à l'autre par un trajet conducteur 27 à travers un dispositif de mesure de courant MC dont le rôle apparaîtra plus loin.

Comme le montre la figure 1, la borne de sortie prioritaire 22 est raccordée aux points de consommation 3, 4, 6 et 7 détaillés plus haut car il est reconnu que l'alimentation de ces points ne peut être interrompue sans gêne importante.

Les sorties A, B, C, raccordées dans l'exemple au chauffage des pièces occupées la nuit, au chauffage d'appoint et au chauffe-eau, sont dites non prioritaires. Les sorties D et E, raccordées dans l'exemple au lave-vaisselle 12 et au lave-linge 13 respectivement sont dites semi-prioriraires. L'alimentation de ces différentes sorties A à E, peut être interrompue par des relais (ou des dispositifs équivalents du type triac) respectifs RA, RB, RC, RD, RE, (figure 3), dans des conditions que l'on va décrire ci-après.

L'alimentation des sorties non prioritaires A, B, C peut être interrompue lorsque le courant consommé par l'installation dépasse un certain seuil.

A cet effet, le dispositif de mesure de courant MC (figure 3) fournit sur sa sortie 28 un potentiel qui est fonction du courant dans le trajet 27 lequel est situé en amont d'une ramification 29 reliant la ligne 26 aux sorties A, B, C, D, E à travers l'étage de puissance des relais RA, RB, RC, RD, RE. Le courant dans le trajet 27 est donc le courant total consommé par l'installation. La sortie 28 du dispositif de mesure MC est reliée à l'une des entrées d'un comparateur 31 dont l'autre entrée est raccordée à la sortie 33 d'un dispositif de consigne 32. Le potentiel présent sur la sortie 33 du dispositif 32 est fonction de la position d'un sélecteur rotatif 34 (voir aussi figure 2) accessible de l'extérieur de l'appareil 14. Le sélecteur 34 est déplaçable par rapport à une échelle graduée en ampères. En service, le repère du sélecteur 34 est placé en face de la valeur en ampères ou en watts correspondant au contrat souscrit.

Sur sa sortie, le comparateur 31 fournit un signal binaire qui prend l'un des niveaux lorsque le courant mesuré dans le trajet 27 est inférieur à un seuil lui-même légèrement inférieur au courant maximal souscrit par l'abonné, et prend l'autre niveau lorsque le courant mesuré dans le trajet 27 est supérieur à ce seuil.

La sortie du comparateur 31 est raccordée à une entrée 36 d'un microprocesseur 37 par l'intermédiaire d'un interface IF d'adaptation de signal.

Le microprocesseur 37 fonctionne en liaison avec une mémoire MEM et un programmateur PROG. Le microprocesseur 37 a une sortie 41 vers un périphérique de visualisation PVI et vers un interface de commande IC ayant une sortie 42 vers chacun des relais RA, RB, RC, RD, RE.

Le programmateur PROG est accessible à l'utilisateur par l'intermédiaire d'un clavier 43 (figure 2) prévu sur un tableau de commande 44 de l'appareil 14. Par le clavier 43, l'utilisateur peut définir l'ordre dans lequel les sorties non prioritaires A, B, C doivent être débranchées lorsque le courant dans le trajet 27 dépasse le seuil. Le périphérique de visualisation PVI commande un dispositif d'affichage 46 prévu sur le tableau de commande 44 côté du clavier 43.

Le tableau de commande 44 est muni d'un porte-étiquettes 47 qui permet à l'utilisateur d'inscrire en face des lettres A, B, C, D, E les appareils auxquels ces sorties sont respectivement reliées. Des voyants lumineux 48 dont placés chacun en regard de l'une des étiquettes et sont commandés de manière à être allumés lorsque la sortie correspondante est alimentée.

L'alimentation des sorties non prioritaires A, B, C, et celle des sorties semi-prioritaires D, E peut être interrompue pendant des périodes où le tarif de l'énergie est élevé. Dans l'exemple décrit, l'installation comprend un relais REF ayant une entrée 49 branchée sur la phase en amont de la borne 17, une sortie 51 dite de préavis et une sortie 52 de commande de changement de tarif. Le relais REF est sensible à divers signaux véhiculés par le réseau et dont la fréquence est différente de la fréquence de distribution. En réponse à un premier signal, dit "de préavis", la sortie 51 du relais REF est activée. En réponse à un second signal ou signal de changement de tarif, c'est la sortie 52 du relais REF qui est activée. La sortie 51 est branchée sur une borne de préavis 53 de l'appareil 14, la borne 53 étant raccordée à l'entrée d'un avertisseur PEF prévu à l'intérieur de l'appareil et comportant un voyant lumineux 54 (figure 2) qui s'allume quand la sortie 51 est activée. La sortie 52 est reliée à une borne 56 de l'adaptateur 14. Dans l'appareil 14, la borne 56 est raccordée à une entrée 57 du microprocesseur 37 par l'intermédiaire d'un relais d'adaptation RAD qui, en fonction de l'état de la sortie 52, fournit sur l'entrée 57 du microprocesseur un signal binaire acceptable par ce dernier. Sur réception du signal de passage en tarif élevé, le relais REF fait passer sa sortie 52 à l'état activé, et ce jusqu'à ce qu'un autre type de signal soit reçu sur l'entrée 49 du relais REF pour signifier la remise en vigueur du tarif réduit. L'état de l'entrée 57 du microprocesseur est donc fonction du tarif en vigueur.

Selon des modalités qui seront exposées plus loin, l'utilisateur a au préalable défini à l'aide du programmateur PROG une ou plusieurs des sorties A, B, C, D, E qu'il désire débrancher lorsque le tarif est élevé. En fonction de cette programmation et du signal sur son entrée 57, le microprocesseur 37 commande l'ouverture des relais associés à ces sorties lorsque le tarif est élevé.

Un bloc d'alimentation ALIM prélève de l'énergie sur la ligne 26, par l'intermédiaire d'un filtre FIL. Le bloc ALIM dessert sous 10 ou 22 volts tous les organes consommateurs de l'appareil 14. Pour ne pas charger la figure, les liaisons correspondantes ont été symbolisées par la flèche 58. Le bloc ALIM comprend un transformateur et un redresseur fonctionnant à partir de l'énergie prélevée sur le réseau, et un accumulateur alimentant la sortie 58 en cas de coupure de courant sur le réseau. Le bloc ALIM comprend des moyens pour charger l'accumulateur en tant que de besoin à partir du réseau lorsque celui-ci fournit du courant. Entre le filtre FIL et le bloc ALIM est branché un détecteur DET qui fournit sur sa sortie 59 un signal à deux niveaux selon qu'il y a - ou non - du courant sur le réseau. Ce signal binaire est fourni à une entrée du microprocesseur 37. Lorsque d'après l'état de cette entrée, le microprocesseur 37 constate une coupure de courant sur le réseau, il commande un fonctionnement en mode minimum, selon lequel seule la mémoire MEM est alimentée. Ainsi, la consommation de l'appareil 14 sera minimale et par conséquent le contenu de la mémoire MEM sera préservé le plus longtemps possible, compte tenu de la capacité nécessairement limitée de l'accumulateur contenu dans le bloc ALIM.

Le dispositif d'affichage 46 permet d'afficher cinq lettres A, B, C, D, E, chacune en regard de l'une des cinq inscriptions suivantes 1, 2, 3, SP, SP. Sous les inscriptions SP, SP, ne peuvent apparaître que les lettres D et E, ce qui visualise le fait que les sorties D et E sont semi-prioritaires. Sous les inscriptions 1, 2, 3 apparaissent en ordre quelconque les lettres ABC.

Le clavier 43 comprend un bouton 61 permettant de choisir entre un mode lecture et un mode programmation. Le mode lecture interdit l'action des autres boutons 64, et 66 du clavier sur le programme actuellement enregistré. Chaque pression sur le bouton 61 fait changer de mode. Le passage en mode programmation est signalé par le clignotement de la lettre inscrite sous le chiffre 1, c'est-à-dire à laquelle est affecté le premier niveau de priorité.

Un bouton 62 permet de sélectionner entre un mode délestage d'une part et un mode effacement lors des périodes de tarif élevé d'autre part. Un voyant respectif 63 s'allume pour signaler le mode choisi. En mode délestage, une lettre s'allume sous chaque niveau de priorité, l'une d'entre elles clignotant si l'on est en mode programmation. En mode effacement, les sorties qui doivent être coupées lorsque le tarif est élevé portent le sigle = à la place de la lettre correspondante. Un bouton 64 permet de sélectionner le niveau de priorité dont on désire modifier la programmation. Chaque pression sur le bouton 64 fait passer d'un niveau de priorité au suivant. La lettre correspondante clignote. Si le mode délestage a été choisi à l'aide du bouton 62, le bouton 64 ne permet pas de se placer sous les niveaux SP. Lorsque le niveau 3 est sélectionné et que l'utilisateur appuie sur le bouton 64, l'appareil revient au niveau 1. Si au contraire le mode effacement a été choisi, le bouton 64 permet de sélectionner successivement les cinq niveaux de priorité.

Le bouton 66 permet de modifier la programmation afférante au niveau de priorité sélectionné.

En mode délestage, lorsque le niveau 1 est sélectionné, une pression sur le bouton 66 fait passer à la lettre qui suit dans l'alphabet ou fait revenir à la lettre A si la précédente programmation était la lettre C. La programmation du niveau de priorité auquel était jusqu'à présent affectée la lettre qui vient d'être choisie est automatiquement modifiée : c'est alors la lettre qui était précédemment affectée du niveau 1 qui est désormais affectée de ce niveau. La programmation du niveau de priorité auquel est affectée la troisième sortie, c'est-à-dire celle qui n'est ni l'ancienne ni la nouvelle sortie affectée au niveau 1, n'est pas modifiée. L'utilisateur peut appuyer encore une fois sur le bouton 66, auquel cas la programmation du niveau 1 sera intervertie avec celle du niveau qui n'avait pas été modifiée à la précédente action, tandis que la programmation du niveau qui avait été affectée par la précédente action demeurera cette fois inchangée.

Pour la programmation du niveau 2, le processus est le même sauf que cette fois, la programmation du niveau 1 ne peut plus être modifiée. En d'autres termes, toute action sur le bouton 66 revient à intervertir les programmations des niveaux 2 et 3. La programmation du niveau 3 découle donc de celle des niveaux 1 et 2.

En mode d'effacement, chaque action sur le bouton 66 inverse la programmation affectée à la sortie choisie à l'aide du bouton 64. En d'autres termes, si la sortie A a été sélectionnée à l'aide du bouton 64, et que celle-ci apparaisse sur le dispositif d'affichage 46 et élevé, une pression sur le bouton 66 provoque l'extinction sous le chiffre 2 dans l'exemple représenté, ce qui indique que la sortie A sera débranchée lorsque le tarif est élevé, et une nouvelle pression sur le bouton 66 fera revenir à l'état antérieur.

En cas de perturbations sur le réseau, le microprocesseur peut être bloqué et le programme enregistré être perdu. En appuyant sur la commande 67, on réinitialise le microprocesseur. Les lettres A, B, C s'inscrivent respectivement sous les chiffres 1, 2, 3, et toutes les sorties sont programmées pour être maintenues lorsque le tarif est élevé. Une nouvelle programmation peut être effectuée.

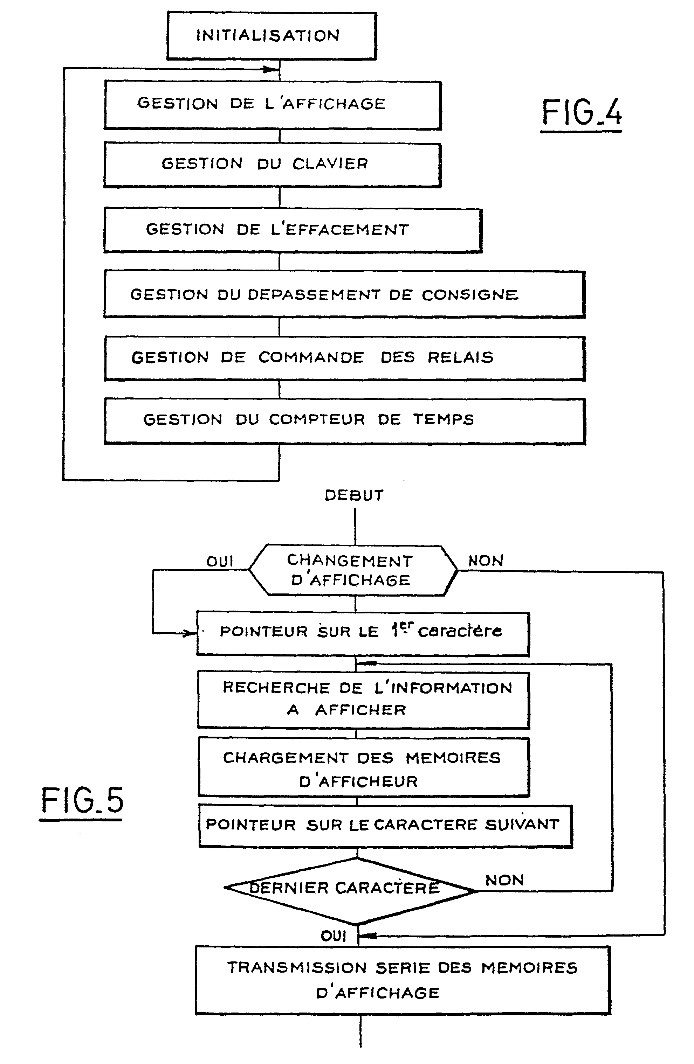

La figure 4 est l'organigramme général du microprocesseur 37. L'opération d'initialisation a lieu à la mise en route de l'appareil, et chaque fois que l'on appuie sur le bouton 67. Une fois celle-ci effectuée, ont lieu cycliquement la gestion de l'affichage, la gestion du clavier, la gestion de la ligne effacement, la gestion du dépassement de consigne, la gestion de la commande des relais, et la gestion du compteur de temps.

Avant d'étudier en référence aux figures 5 à 12 le détail de ces opérations, on précisera d'abord que la mémoire MEM comprend une mémoire morte renfermant des données immuables de l'appareil, en particulier les programmes dont les organigrammes vont être étudiés plus loin. La mémoire MEM renferme d'autre part en mémoire vive les informations suivantes:

- une mémoire par niveau de priorité, dont le contenu est lié à l'adresse du relais qui lui est attribué par l'utilisateur. Un de ses caractères binaires contient la programmation de cette voie en matière de tarif horaire fort et un autre caractérise la coupure dans le même cas;
- les mémoires d'affichage, nécessaires pour assurer l'affichage permanent;
- une mémoire de comptage de temps;
- une mémoire d'effacement, indiquant si l'on est - ou non - en période de tarif élevé;
- une mémoire de dépassement de consigne;
- une mémoire état du réseau;
- une mémoire d'autorisation horaire de rebrancher;
- une mémoire dite "mémoire lecture/programmation", qui contient le mode de gestion de l'affichage choisi par l'utilisateur, Lecture/Programmation et Effacement/Délestage; elle contient aussi le numéro du caractère clignotant et une indication de la phase du clignotement (allumé ou éteint).
- une mémoire indiquant un changement de l'affichage.

L'opération d'initialisation prévue au début de l'organigramme général de la figure 4 consiste à charger la mémoire vive avec un ensemble d'informations correspondant au cas ou les niveaux de priorité 1, 2 et 3 sont respectivement affectés aux sorties A, B et C, où toutes les sorties doivent être maintenues lorsque le tarif est élevé, et où la consigne n'est pas dépassée. L'opération d'initialisation consiste également à mettre à zéro la mémoire de comptage de temps, à programmer une commande des relais RA..... RE qui les laisse dans leur état fermé, et à commander l'affichage correspondant à la programmation initiale précitée.

La figure 5 représente l'organigramme de gestion de l'affichage. Cet organigramme commence par un test dont le résultat est contenu dans la mémoire indiquant un changement de programmation. Si l'utilisateur n'a pas changé la programmation, la gestion de l'affichage consiste simplement à transmettre en série le contenu des mémoires d'affichage. Si l'utilisateur a changé l'affichage, l'organigramme passe par une boucle consistant, pour chaque caractère à afficher, à aller rechercher les informations correspondantes dans les mémoires relatives au niveau de priorité de délestage et aux autorisations d'effacement en période à tarif élevé.

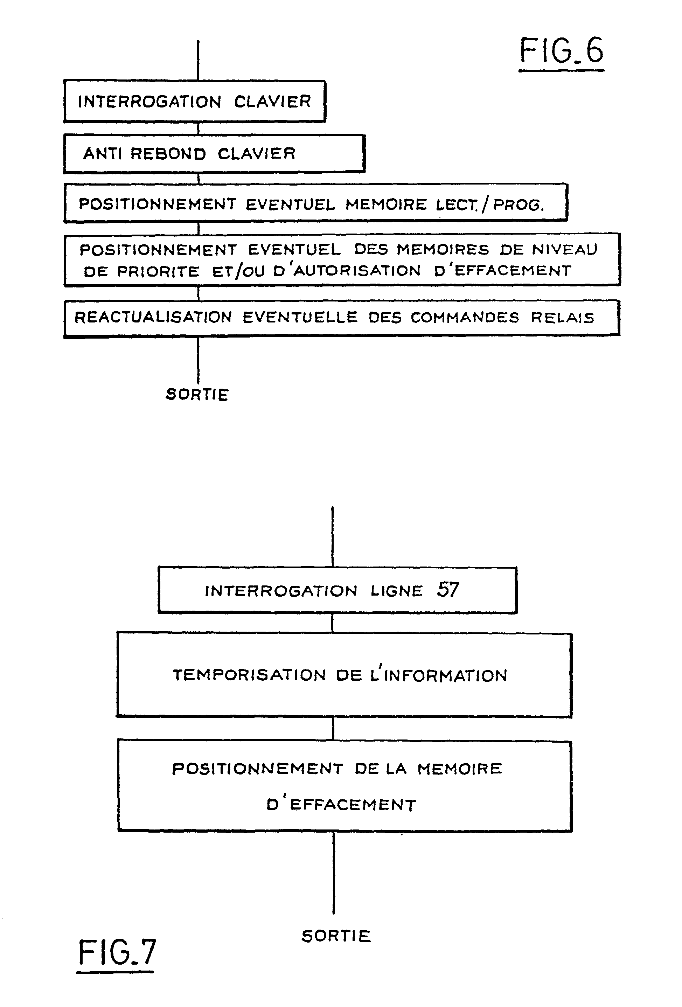

La figure 6 représente l'organigramme de gestion du clavier. Le groupe d'instructions "anti-rebond clavier" sert à ne prendre en compte qu'une seule fois un ordre dont la durée est égale à plusieurs dizaines de cycles - programmes. Il évite aussi les effets des rebonds parasites. Ensuite, les mémoires "lecture/programmation", "Niveaux de priorité" et "Autorisations d'effacement" sont modifiées en tant que de besoins. La dernière instruction de l'organigramme consiste à modifier immédiatement l'état des relais RA..... RE si un délestage et/ou un effacement sont en cours, de façon à rendre immédiatement l'état de l'ensemble des relais conforme à la nouvelle programmation. Ceci est avantageux car la modification de la programmation par le programmateur peut résulter du désir de ce dernier de remettre immédiatement en service un point de consommation où l'alimentation est présentement interrompue en raison de la précédente programmation.

La figure 7 concerne la gestion de la mémoire d'effacement. L'organigramme consiste à rechercher le niveau sur l'entrée 57 du microprocesseur, à ne prendre en compte cette information qu'après un certain temps pour éviter de tenir compte d'une perturbation, puis à positionner la mémoire d'effacement de façon qu'elle soit toujours indicative du tarif en vigueur.

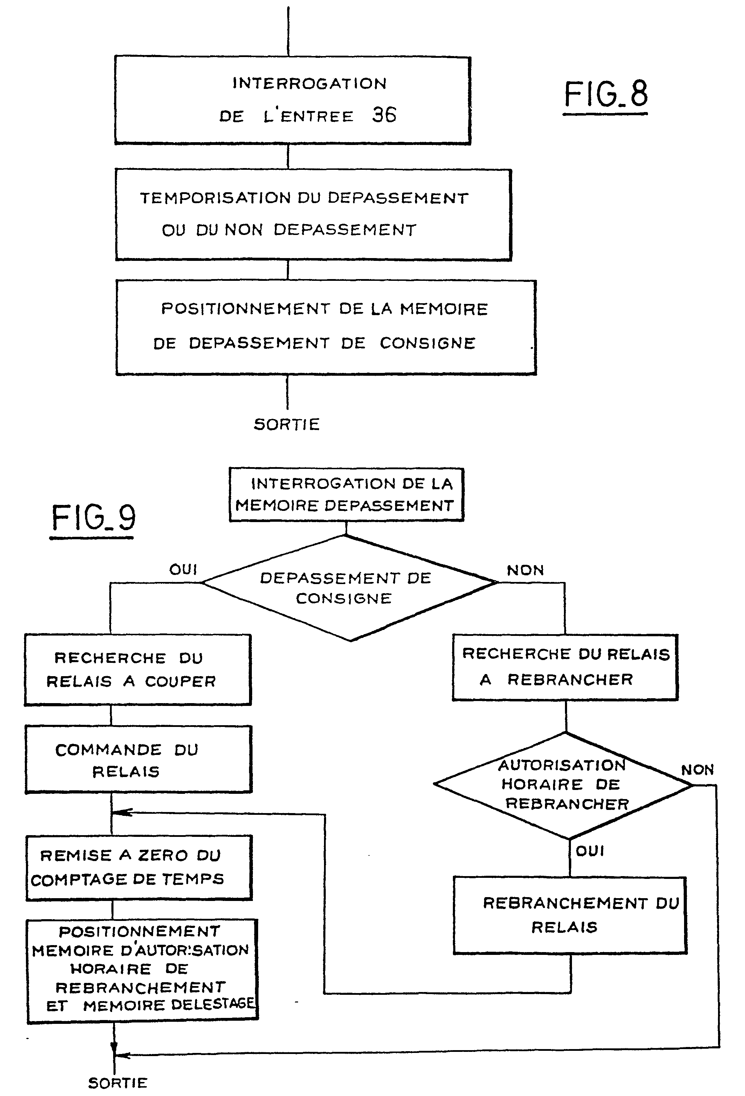

La figure 8 concerne la gestion du dépassement de consigne. L'organigramme consiste à rechercher l'état de l'entrée 36 du microprocesseur, à ne prendre en compte cette information qu'après un certain temps, à la fois pour éviter les conséquences des perturbations et aussi pour tenir compte du temps de réponse des relais, puis à positionner la mémoire de dépassement de consigne. Il est important d'admettre une pointe de courant car celle-ci peut résulter par exemple du démarrage d'un moteur dans l'installation et il serait désavantageux qu'il en résulte immédiatement un délestage.

La figure 9 est l'organigramme de la gestion des relais relativement au dépassement de consigne. Si la consigne est dépassée, on recherche dans la mémoire niveau de priorité l'adresse du relais qui doit être débranché en cas de dépassement. Ce relais est ensuite commandé en conséquence et les mémoires spécifiques sont modifiées pour indiquer quels sont désormais les premiers relais à couper et respectivement à rebrancher. La mémoire d'autorisation horaire de rebrancher passe en état de non autorisation. Si le relais dont l'ouverture vient d'être décidée était déjà ouvert en raison d'un effacement, le dépassement de consigne ne sera pas éliminé, ce qui sera détecté au cycle suivant et provoquera alors l'ouverture du relais ayant le niveau de priorité immédiatement supérieur.

En l'absence de dépassement de consigne, l'organigramme consiste à s'interroger sur la nécessité de refermer un éventuel relais ayant été précédemment ouvert en raison d'un délestage. La recherche du relais à rebrancher s'effectue de la même façon que dans l'autre branche de l'organigramme. De manière non représentée dans organigramme, un test recherche si l'on est en période d'effacement pour cause de tarif élevé. Si oui, on recherche si le relais à rebrancher ne doit pas être débranché pour effacement. S'il doit l'être, on recherche dans la mémoire "Niveaux de priorité" quel est le relais à rebrancher ensuite. Si l'on n'est pas en période d'effacement, on vérifie que la précédente ouverture de relais résultant d'un délestage, ou la précédente fermeture de relais dans le cadre de la gestion du dépassement de consigne a bien été effectuée depuis plus de dix minutes. En effet, si suite à un dépassement de consigne, un relais vient d'être ouvert, il faut éviter de le refermer immédiatement, ce qui provoquerait aussitôt un nouveau dépassement. Si ces dix minutes sont bien écoulées, le relais est rebranché et le comptage de temps remis à zéro.

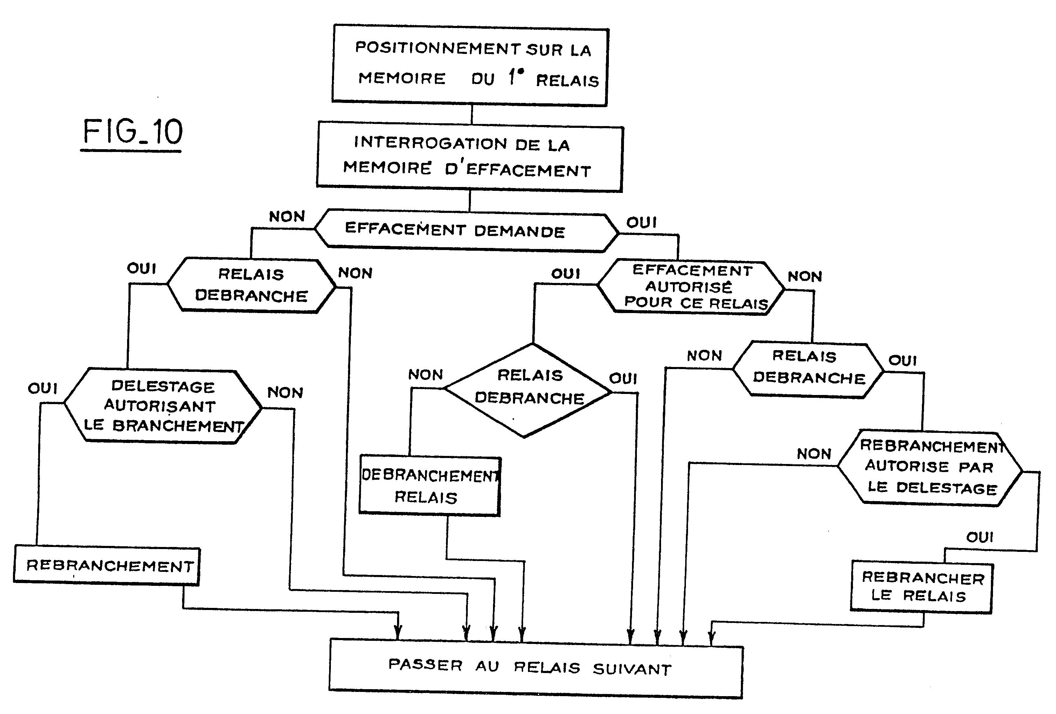

La figure 10 concerne la gestion des relais relativement à l'effacement en période de tarif élevé. L'organigramme représenté concerne la gestion d'un relais, un bouclage (non représenté) permettant de gérer successivement les cinq relais.

Selon cet organigramme, on recherche d'abord si l'effacement est demandé, c'est-a-dire si on est en période à tarif élevé.

Si tel n'est pas le cas, et que le relais est débranché, on le rebranche sauf si sa mémoire spécifique indique qu'il a été débranché suite à un délestage.

Si au contraire l'effacement est demandé, on recherche d'abord si, par programmation, l'usager a autorisé l'effacement de ce relais. Si oui, l'organigramme débranche ce relais, ou maintient celui-ci débranché s'il l'était déjà.

Si l'effacement n'a pas été autorisé pour ce relais, et que le relais est malgré tout débranché, il peut s'agir d'un délestage auquel cas le relais reste débranché ou d'une modification de la programmation par l'usager, auquel cas le relais est aussitôt rebranché.

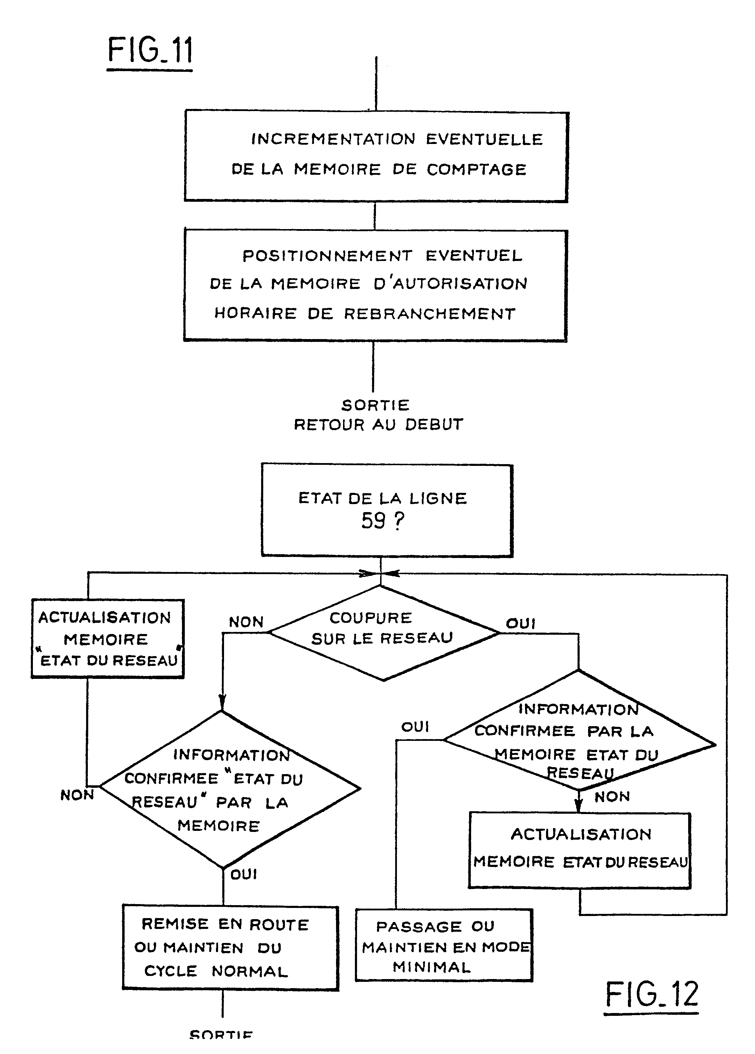

L'organigramme de la figure 11 concerne la gestion du compteur de temps. La mémoire de comptage est progressivement incrémentée. Quand son contenu correspond à une durée de dix minutes, la mémoire d'autorisation horaire de rebranchement prend son état autorisant le rebranchement dans l'organigramme de la figure 9.

L'organigramme de la figure 12 concerne la gestion de l'appareil relativement à une possible coupure de courant dans le réseau distributeur. Un circuit alimenté par batterie génère une interruption sur une sortie 69 du détecteur DET en cas de coupure du secteur; cette interruption est prioritaire sur toute autre commande programmée. A la reconnaissance de l'interruption, on recherche d'abord l'état de la ligne 59. Si celle-ci indique que le réseau de distribution est en service, un second test recherche si la mémoire "Etat du réseau" confirme cette information. Si tel n'est pas le cas, la mémoire "Etat du réseau" est actualisée et le circuit logique revient au premier test. Si l'information est confirmée par la mémoire "Etat du réseau", le fonctionnement normal de l'appareil 14 est maintenu ou rétabli.

Si, au premier test, une coupure d'alimentation est détectée, on vérifie d'abord si cette information est confirmée par la mémoire "Etat du réseau". Si tel n'est pas le cas, la mémoire précitée est actualisée et le circuit logique revient au premier test. Si au contraire l'information est confirmée par la mémoire, le microprocesseur commande le passage en mode minimal, dans lequel seuls la mémoire MEM et le détecteur DET sont alimentés.

Le fonctionnement de l'appareil qui vient d'être décrit est le suivant. A la mise en route, l'utilisateur place le repère du sélecteur 34 en face du chiffre correspondant au nombre d'ampères maximal permis par l'abonnement souscrit auprès de l'Organisme Distributeur. Il programme ensuite à l'aide du clavier 43 le niveau de priorité de chacune des sorties A, B, C en cas de nécessité de délester, et il désigne les sorties à débrancher lorsque le tarif est élevé. Il appuie ensuite une fois sur le bouton 61 pour remettre l'appareil en mode lecture. Le dispositif d'affichage 46 fonctionne ensuite en permanence. Grâce aux voyants 48, l'utilisateur peut vérifier si le non fonctionnement d'un point de consommation résulte d'un débranchement décidé par l'adaptateur ou d'une panne.

En cas de dépassement du seuil de courant déterminé par le sélecteur 34, la sortie affectée du niveau de priorité 3 est d'abord débranchée puis, en cas de besoin celle affectée du niveau de priorité 2 et celle affectée du nivau de priorité 1. Si, après un délestage, le courant consommé reste inférieur au seuil pendant plus de dix minutes, la sortie débranchée ayant le nivau de priorité le plus élevé est rebranchée, sauf si elle a été effacée pour prendre en compte une période à tarif élevé. Suite à ce rebranchement, et s'il reste encore au moins une sortie débranchée pour délestage et si le seuil de courant est toujours respecté, une autre sortie pourra être rebranchée immédiatement.

Si au cours d'un effacement et/ou d'un délestage, l'utilisateur se trouve particulièrement gêné par le débranchement de l'une des sorties, il peut modifier la programmation pour obtenir son rebranchement.

Bien entendu, l'invention n'est pas limitée aux exemples décrits et représentés, et de nombreux aménagements peuvent être apportés à ces exemples sans sortir du cadre de l'invention.

C'est ainsi que la distinction entre sortie non prioritaire et sortie semi-prioritaire n'est pas obligatoire et toutes les sorties susceptibles d'effacement pourraient également être susceptibles de délestage.

Des moyens de programmation et d'affichage distincts pourraient être prévus pour chacune des fonctions "effacement" et "délestage".

## Revendications

1. Adaptateur de puissance, comprenant une entrée de puissance (16), plusieurs sorties de puissance (22, A, B, C, D, E), et un dispositif délesteur (MC, 31, 32, IF, 37, PROG, MEM, IC, RA, RB, RC) capable, lorsque la puissance consommée dépasse un certain seuil, de débrancher en cascade selon un ordre préétabli, certaines au moins des sorties de puissance (A, B, C) jusqu'à ce que le seuil soit respecté, et pour rétablir ensuite le branchement des sorties (A, B, C) dans l'ordre inverse, caractérisé en ce qu'il comprend en outre des moyens (PROG) permettant d'affecter sélectivement une autorisation d'effacement à certaines au moins des sorties de puissance (A à B) indépendamment de l'ordre préétabli précité, et des moyens d'effacement (37, PROG, MEM, IC, RA..... RE) sensibles à un signal représentatif du coût de l'énergie pour débrancher les sorties affectées d'une autorisation d'effacement lorsque le coût de l'énergie est élevé.

2. Adaptateur selon la revendication 1, caractérisé en ce que certaines des sorties de puissance (A, B, C) sont susceptibles d'être débranchées en cascade par le délesteur et d'être affectées d'une autorisation d'effacement.

3. Adaptateur selon l'une des revendications 1 ou 2, caractérisé en ce que les sorties de puissance comprennent des sorties de puissance semi-prioritaires (D, E), indépendantes du dispositif délesteur, mais susceptibles d'être affectées d'une autorisation d'effacement.

4. Adaptateur selon l'une des revendications 1 à 3, caractérisé en ce que l'une des sorties de puissance (22) est en liaison directe avec l'entrée de puissance (16), et est indépendante du dispositif délesteur et des moyens d'effacement.

5. Adaptateur selon l'une des revendications 1 à 4, caractérisé en ce qu'une entrée des moyens d'effacement est constituée par une borne de commande (56) destinée à être reliée à la sortie d'un relais (REF) commandé par un signal à fréquence spécifique indicatif d'un changement de tarif.

6. Adaptateur selon l'une des revendications 1 à 5, caractérisé en ce qu'il comprend des moyens de programmation (PROG) accessibles à l'usager pour programmer des niveaux de priorité définissant l'ordre préétabli de délestage, et affecter sélectivement les autorisations d'effacement.

7. Adaptateur selon la revendication 6, caractérisé en ce que les moyens de programmation (PROG) sont sélectivement utilisables selon un mode de programmation des priorités de délestage par le délesteur, et un mode de programmation des autorisations d'effacement.

8. Adaptateur selon la revendication 7, caractérisé en ce que les moyens de programmation comprennent un dispositif de commande du mode de programmation (62), une commande de la sortie à programmer (64), et une commande d'incrémentation de la programmation (66) utilisable aussi bien en mode de programmation des priorités de délestage qu'en mode de programmation des autorisations d'effacement.

9. Adaptateur selon la revendication 8, caractérisé en ce que la commande de la sortie à programmer est conçue pour sélectionner cycliquement les niveaux de priorité pour permettre de leur affecter l'une des sorties et une éventuelle autorisation d'effacement de cette sortie, et en ce qu'en mode de programmation des priorités de délestage, la commande d'incrémentation de la programmation (66) fait passer cycliquement par les sorties possibles, en sautant celles déjà affectées à des niveaux de priorité qui précèdent celui qui est concerné par la programmation en cours.

10. Adaptateur selon la revendication 8, caractérisé en ce qu'en mode de programmation des priorités de délestage, la commande de la sortie à programmer (64) pour chaque niveau de priorité fait sauter au moins un niveau de priorité (SP) auquel est affectée d'une façon immuable une sortie (D, E) susceptible uniquement d'une autorisation d'effacement, non d'un délestage pour dépassement du seuil de puissance.

11. Adaptateur selon l'une des revendications 8 ou 9, caractérisé en ce qu'il comprend en outre des moyens d'affichage (46) des niveaux de priorité et des autorisations d'effacement affectées à chaque sortie.

12. Adaptateur selon l'une des revendications 6 à 11, caractérisé en ce que la modification des programmations par l'usager provoque immédiatement une modification correspondante de l'état de branchement des différentes sorties (A à E) en fonction de la puissance demandée et du tarif en vigueur pour l'énergie.

## Patentansprüche

1. Leistungsadapter, mit einem Leistungseingang (16) mehreren Leistungsausgängen (22, A, B, C, D, E) und einer Entlastungsvorrichtung (MC, 31, 32, IF, 37, PROG, MEM, IC, RA, RB, RC), die imstande ist, wenn die verbrauchte Leistung einen bestimmten Schwellwert überschreitet, in Kaskade nach einer vorbestimmten Ordnung wenigstens bestimmte Leistungsausgänge (A, B, C) abzuschalten, bis der Schwellwert eingehalten wird, um anschließend das erneute Anschalten der Ausgänge (A, B, C) in umgekehrter Reihenfolge vorzunehmen, dadurch gekennzeichnet, daß er ferner Mittel (PROG) enthält, durch die wenigstens bestimmten Leistungsausgängen (A bis E) selektiv eine Löschgenehmigung unabhängig von der oben genannten vorbestimmten Reihenfolge zugewiesen werden kann, sowie Löschmittel (37, PROG, MEM, IC, RA .... RE) enthält, die auf ein Signal ansprechen, welches für die Energiekosten repräsentativ ist, um die Ausgänge, welchen eine Löschgenehmigung zugewiesen ist, abzuschalten, wenn die Energiekosten hoch sind.

2. Adapter nach Anspruch 1, dadurch gekennzeichnet, daß bestimmte Leistungsausgänge (A, B, C) in Kaskade durch die Entlastungsvorrichtung abgeschaltet werden können und ihnen eine Löschgenehmigung zugewiesen werden kann.

3. Adapter nach Anspruch 1 oder 2, dadurch gekennzeichnet, daß die Leistungsausgänge semiprivilegierte Leistungsausgänge (D, E) enthalten, die unabhängig von der Entlastungsvorrichtung sind, denen jedoch eine Löschgenehmigung Zugewiesen werden kann.

4. Adapter nach einem der Ansprüche 1 bis 3, dadurch gekennzeichnet, daß einer der Leistungsausgänge (22) in direkter Verbindung mit dem Leistungsausgang (16) steht und unabhängig von der Entlastungsvorrichtung und den Löschmitteln ist.

5. Adapter nach einem der Ansprüche 1 bis 4, dadurch gekennzeichnet, daß ein Eingang der Löschmittel durch einen Steueranschluß (56) gebildet ist, der dazu bestimmt ist, mit dem Ausgang eines Relais (REF) verbunden zu werden, das durch ein Signal mit besonderer Frequenz gesteuert wird, welche eine Tarifänderung anzeigt.

6. Adapter nach einem der Ansprüche 1 bis 5, dadurch gekennzeichnet, daß er Programmiermittel (PROG) enthält, die für den Benutzer zugänglich sind, um Prioritätsniveaus zu programmieren, welche die vorbestimmte Reihenfolge der Entlastung definieren, und um die Löschgenehmigungen selektiv zuzuweisen.

7. Adapter nach Anspruch 6, dadurch gekennzeichnet, daß die Programmiermittel (PROG) selektiv verwendbar sind in einer Betriebsart zur Programmierung der Entlastungsprioritäten für die Entlastungsvorrichtung und einer Betriebsart der Programmierung der Löschgenehmigungen.

8. Adapter nach Anspruch 7, dadurch gekennzeichnet, daß die Programmiermittel eine Vorrichtung zur Steuerung der Programmierbetriebsart (62), eine Steuerung des zu programmierenden Ausgangs (64) und eine Steuerung der Programmierinkrementierung (66) enthalten, die sowohl für die Programmierung der Entlastungsprioritäten als auch für die Programmierung der Löschgenehmigungen verwendbar ist.

9. Adapter nach Anspruch 8, dadurch gekennzeichnet, daß die Steuerung des zu programmierenden Ausganges so ausgelegt ist, daß zyklisch die Prioritätsniveaus ausgewählt werden, damit ihnen einer der Ausgänge und eine eventuelle Löschgenehmigung dieses Ausganges zugewiesen werden kann, und daß bei der Betriebsart der Programmierung der Entlastungsprioritäten die Inkrementiersteuerung der Programmierung (66) die möglichen Ausgänge zyklisch durchlaufen läßt, wobei diejenigen ausgelassen werden, die bereits Prioritätsniveaus zugewiesen wird, welche dem vorausgehen, das von der laufenden Programmierung betroffen ist.

10. Adapter nach Anspruch 8, dadurch gekennzeichnet, daß in der Betriebsart der Programmierung der Entlastungsprioritäten die Steuerung des zu programmierenden Ausgangs (64) für jedes Prioritätsniveau wenigstens ein Prioritätsniveau (SP) ausläßt, dem ein Ausgang (D, E) unveränderlich zugewiesen ist, der lediglich eine Löschgenehmigung erhalten kann, nicht aber eine Entlastung bei Überschreitung des Leistungsschwellwertes.

11. Adapter nach Anspruch 8 oder 9, dadurch gekennzeichnet, daß er ferner Anzeigemittel (46) zum Anzeigen der Prioritätsniveaus und der Löschgenehmigungen, mit denen jeweils ein Ausgang behaftet ist, aufweist.

12. Adapter nach einem der Ansprüche 6 bis 11, dadurch gekennzeichnet, daß die Veränderung der Programmierung durch den Benutzer eine sofortige entsprechende Veränderung des Anschlußzustands der verschiedenen Ausgänge (A bis E) in Abhängigkeit von der abgerufenen Leistung und von dem geltenden Energietarif hervorruft.

## Claims

1. A power adapter comprising a power input (16), a plurality of power outputs, (22, A, B, C, D, E) and a load-shedding device (MC, 31, 32, IF, 37, PROG, MEM, IC, RA, RB, RC) so designed that when the power consumption oversteps a predetermined threshold value, at least some of the power outputs (A, B, C) are disconnected in cascade in a pre-established order until said power consumption is restored to said threshold value and said power outputs (A, B, C) are subsequently re-connected in the reverse order, characterized in that said power adapter is provided in addition with means (PROG) for selectively assigning an erasure permission to at least a certain number of power outputs (A to E) independently of the pre-established order aforesaid, and with erasing means (37, PROG, MEM, IC, RA,... RE) responsive to a signal which is representative of the power cost for disconnecting the outputs to which an erasure permission has been assigned when the power cost is at a high value.

2. An adapter according to claim 1, characterized in that some of the power outputs (A, B, C) can be disconnected in cascade by the load shedder and can be assigned an erasure permission.

3. An adapter according to claim 1 or claim 2, characterized in that the power outputs include semi-priority power outputs (D, E) which are independent of the load-shedding device but can be assigned an erasure permission.

4. An adapter according to one of claims 1 to 3, characterized in that one of the power outputs (22) is directly coupled with the power input (16) and is independent of the load-shedding device and the erasing means.

5. An adapter according to one of claims 1 to 4, characterized in that one input of the erasing means is constituted by a control terminal (56) to be connected to the output of a relay (REF) controlled by a specific frequency signal which indicates a change of billing rate.

6. An adapter according to one of claims 1 to 5, characterized in that said adapter includes programming means (PROG) which are accessible to the user for programming priority levels which define the pre-established load-shedding order and for selectively assigning the erasure permissions.

7. An adapter according to claim 6, characterized in that the programming means (PROG) are selectively utilizable in accordance with a mode of programming the priorities of load-shedding by the load-shedder and a mode of programming the erasure permissions.

8. An adapter according to claim 7, characterized in that the programming means include a device (62) for controlling the programming mode, a control (64) for the output to be programmed, and a control (66) for incrementation of programming which can be utilized both in the mode of programming the load-shedding priorities and in the mode of programming the erasure permissions.

9. An adapter according to claim 8, characterized in that the control for the output to be programmed is so designed as to select the priority levels cyclically in order to permit assignment to said levels of one of the outputs and a possible permission for erasure of said output and in that, in the mode of programming the load-shedding priorities, the control (66) for incrementation of programming causes to pass cyclically through the possible outputs while omitting those outputs which have already been assigned to priority levels preceding the priority level concerned in the programming operation which is being performed.

10. An adapter according to claim 8, characterized in that, in the mode of programming the load-shedding priorities, the control (64) for the output to be programmed for each priority level causes jumping over at least one priority level (SP) to which is invariably assigned one output (D, E) capable of being assigned only an erasure permission and not a load shed for a power threshold overshoot.

11. An adapter according to claim 8 or claim 9, characterized in that said adapter includes in addition a device (46) for displaying priority levels and erasure permissions which are assigned to each output.

12. An adapter according to one of claims 6 to 11, characterized in that modification of programs by the user immediately produces a corresponding modification in the state of connection of the different outputs (A to E) as a function of the power required and as a function of the prevailing power rate.

EP 0 208 597 B1

FIG.1

FIG_2

3

FIG_3

EP 0 208 597 B1

INITIALISATION

GESTION DE L'AFFICHAGE

**FIG.4**

GESTION DU CLAVIER

GESTION DE L'EFFACEMENT

GESTION DU DEPASSEMENT DE CONSIGNE

GESTION DE COMMANDE DES RELAIS

GESTION DU COMPTEUR DE TEMPS

DEBUT

OUI — CHANGEMENT D'AFFICHAGE — NON

POINTEUR SUR LE 1$^{er}$ caractère

RECHERCHE DE L'INFORMATION A AFFICHER

CHARGEMENT DES MEMOIRES D'AFFICHEUR

**FIG.5**

POINTEUR SUR LE CARACTERE SUIVANT

DERNIER CARACTERE — NON

OUI

TRANSMISSION SERIE DES MEMOIRES D'AFFICHAGE

FIG. 6

INTERROGATION CLAVIER

ANTI REBOND CLAVIER

POSITIONNEMENT EVENTUEL MEMOIRE LECT./PROG.

POSITIONNEMENT EVENTUEL DES MEMOIRES DE NIVEAU DE PRIORITE ET/OU D'AUTORISATION D'EFFACEMENT

REACTUALISATION EVENTUELLE DES COMMANDES RELAIS

SORTIE

INTERROGATION LIGNE 57

TEMPORISATION DE L'INFORMATION

POSITIONNEMENT DE LA MEMOIRE D'EFFACEMENT

SORTIE

FIG. 7

FIG.8

INTERROGATION DE L'ENTREE 36

TEMPORISATION DU DEPASSEMENT OU DU NON DEPASSEMENT

POSITIONNEMENT DE LA MEMOIRE DE DEPASSEMENT DE CONSIGNE

SORTIE

FIG.9

INTERROGATION DE LA MEMOIRE DEPASSEMENT

DEPASSEMENT DE CONSIGNE

OUI

RECHERCHE DU RELAIS A COUPER

COMMANDE DU RELAIS

REMISE A ZERO DU COMPTAGE DE TEMPS

POSITIONNEMENT MEMOIRE D'AUTORISATION HORAIRE DE REBRANCHEMENT ET MEMOIRE DELESTAGE

SORTIE

NON

RECHERCHE DU RELAIS A REBRANCHER

AUTORISATION HORAIRE DE REBRANCHER

NON

OUI

REBRANCHEMENT DU RELAIS

13

**FIG_10**

POSITIONNEMENT SUR LA MEMOIRE DU 1° RELAIS

INTERROGATION DE LA MEMOIRE D'EFFACEMENT

EFFACEMENT DEMANDE — NON / OUI

NON → RELAIS DEBRANCHE → OUI / NON

OUI → EFFACEMENT AUTORISÉ POUR CE RELAIS → NON

OUI — DELESTAGE AUTORISANT LE BRANCHEMENT — NON

NON — RELAIS DEBRANCHE — OUI

NON — RELAIS DEBRANCHE — OUI

DEBRANCHEMENT RELAIS

REBRANCHEMENT AUTORISE PAR LE DELESTAGE — NON / OUI

REBRANCHEMENT

REBRANCHER LE RELAIS

PASSER AU RELAIS SUIVANT

## FIG.11

INCREMENTATION EVENTUELLE
DE LA MEMOIRE DE COMPTAGE

POSITIONNEMENT EVENTUEL
DE LA MEMOIRE D'AUTORISATION
HORAIRE DE REBRANCHEMENT

SORTIE
RETOUR AU DEBUT

ETAT DE LA LIGNE
59 ?

ACTUALISATION
MEMOIRE
"ETAT DU RESEAU"

NON — COUPURE SUR LE RESEAU — OUI

INFORMATION
CONFIRMEE PAR LA
MEMOIRE ETAT DU
RESEAU

OUI

INFORMATION
CONFIRMEE "ETAT DU
RESEAU" PAR LA
MEMOIRE

NON

NON

ACTUALISATION
MEMOIRE ETAT DU RESEAU

OUI

REMISE EN ROUTE
OU MAINTIEN DU
CYCLE NORMAL

PASSAGE OU
MAINTIEN EN MODE
MINIMAL

## FIG.12

SORTIE